# EUROPEAN PATENT APPLICATION

(11) **EP 2 306 577 A1**
(43) Date of publication of application: **06.04.2011**
(21) Application number: 09800176.1
(22) Date of filing: 30.06.2009
(51) Int. Cl.: H01M 8/24, H01M 8/02, H01M 8/04, H01M 8/10

(54) **FUEL CELL STACK AND FUEL BATTERY USING THE SAME**

(30) Priority: 23.07.2008 JP 2008189300
(71) Applicant: Panasonic Corporation, Kadoma-shi Osaka 571-8501 (JP)
(72) Inventor: KOZU Katsumi, Chuo-ku ,Osaka-shi, Osaka 540-620 (JP); KIMURA Tadao, Osaka 540-6207 (JP)
(74) Representative: Schwabe - Sandmair - Marx
(86) International application number: PCT/JP2009/003005
(87) International publication number: WO 2010/010659

(57) **Abstract**

In a fuel cell stack, a cell stack is formed by laminating membrane electrode assemblies and a separator, and sandwiching them with a pair of end plates from the both sides in the laminating direction, and the cell stack is tightened and fastened in a laminating direction by a first plate spring. The first plate spring includes two arm sections for pressing the end plates and a connecting section connecting the arm sections so as to have a C-shaped cross-section. Space between the connecting section of the first plate spring, and membrane electrode assembly and the end plates functions as a first cooling air flow passage.

## Description

### TECHNICAL FIELD

The present invention relates to a fuel cell stack and a fuel cell using the same. More particularly, it relates to a structure for fastening a fuel cell stack and for controlling a temperature thereof.

### BACKGROUND ART

Recently, with the rapid widespread of portable and cordless electronic devices, as driving power sources for such devices, small, secondary batteries with lightweight and large energy density have been increasingly demanded. Furthermore, technology development has been accelerated in not only secondary batteries used for small consumer goods but also large secondary batteries for electric power storages and electric vehicles, which require long-time durability and safety. In addition, much attention has been paid to fuel cells enabling long-time continuous use with fuel supplied, rather than secondary batteries that need charging.

A fuel cell includes a fuel cell stack including a cell stack, a fuel supplying section for supplying fuel to the cell stack, and an oxidizing agent supplying section for supplying an oxidizing agent. The cell stack is formed by laminating a membrane electrode assembly that includes an anode electrode, a cathode electrode, and an electrolyte membrane interposed between the anode and cathode electrodes, and a separator onto each other, and disposing an endplate on each of the both end sides in the laminating direction. In the cell stack, it is necessary to laminate the anode electrode, the cathode electrode and the electrolyte membrane onto each other tightly, which is not only for allowing an electrochemical reaction to be carried out uniformly. The end plate and the separator are provided with grooves for running the fuel and oxygen (air) as the oxidizing agent therein. Therefore, the anode electrode, the cathode electrode and the electrolyte membrane are laminated tightly in order to prevent fuel or oxygen from leaking out from a portion between the end plate or the separator and the anode electrode or the cathode electrode. In general, a cell stack is fastened as follows. Backing plates whose contact surface to the cell stack is larger than the cell stack are overlapped onto the both end sides of the laminated stack. Then, the entire periphery of protrusion of both backing plates is tightened by a plurality of pairs of a bolt and a nut. Thus, a cell stack is fastened.

Furthermore, in order to reduce the size of a fuel cell, a structure including a rectangular parallelepiped case with one surface opened into which a cell stack is inserted, and a pressing member for pressing the cell stack from one inner wall surface to the other inner wall surface facing each other has been proposed (see, for example, Patent Document 1).

However, when a cell stack is inserted into a rectangular parallelepiped case with one surface opened as mentioned above, a pressing member increases the size in the laminating direction of the cell stack. Therefore, in particular, it is not suitable for a portable fuel cell to be used in small electronic devices such as a notebook-sized personal computer. Furthermore, heat generated according to the electric generation builds up in the case. As a result, a temperature of the cell stack cannot be controlled easily.

### Citation list

### Patent Literature

PTL 1: Japanese Patent Unexamined Publication No. 2006-294366

### SUMMARY OF THE INVENTION

The present invention relates to a fuel cell stack having a small occupied volume, uniformly fastening a membrane electrode assembly, or a membrane electrode assembly, a separator and an end plate, and being capable of sufficiently being cooled, as well as a fuel cell using the fuel cell stack.

The fuel cell stack of the present invention includes a membrane electrode assembly, a pair of end plates, and a first plate spring. The membrane electrode assembly and the end plates form a unit cell of fuel cell. The membrane electrode assembly is formed by laminating an anode electrode, a cathode electrode, and an electrolyte membrane interposed between the anode and cathode electrodes. The end plates are disposed so as to sandwich the membrane electrode assembly from both sides in the laminating direction of the membrane electrode assembly. The first plate spring tightens the membrane electrode assembly and the end plates in the laminating direction. The first plate spring includes two arm sections configured to press the end plates and a connecting section connecting the two arm sections so as to have a C-shaped cross-section. Space between the connecting section of the first plate spring and, the membrane electrode assembly and the end plates functions as a first cooling air flow passage. In this way, by fastening the unit cell of fuel cell using the first plate spring having a C-shaped cross-section, the fuel cell stack can be reduced in size as compared with the case where the fuel cell stack is fastened with bolts and nuts. Furthermore, the unit cell of fuel cell can be fastened uniformly in the planer direction of the membrane electrode assembly, as well as in the center portion. Furthermore, since the space between the connecting section of the first plate spring, and the membrane electrode assembly and the end plates can be used as a first cooling air flow passage, the unit cell of fuel cell can be cooled.

With this configuration, the occupied volume of the fuel cell stack as a whole can be reduced and the unit cell of fuel cell can be fastened uniformly. Furthermore, a temperature of the unit cell of fuel cell can be easily controlled.

### BRIEF DESCRIPTION OF THE DRAWINGS

Fig. 1 is a block diagram showing a configuration of a fuel cell in accordance with an exemplary embodiment of the present invention.
Fig. 2 is a perspective view showing a fuel cell stack in accordance with the exemplary embodiment of the present invention.
Fig. 3 is a sectional view of the fuel cell stack shown in Fig. 2.
Fig. 4 is an enlarged sectional view showing a schematic configuration of a principal part of the fuel cell stack shown in Fig. 2.
Fig. 5 is a side view showing a first plate spring used in the fuel cell stack shown in Fig. 2.
Fig. 6 is a sectional view showing another fuel cell stack in accordance with the exemplary embodiment of the present invention.
Fig. 7 is a side view showing a first plate spring used in the fuel cell stack shown in Fig. 6.

### DETAILED DESCRIPTION OF THE PREFERRED EMBODIMENT

Hereinafter, exemplary embodiments of the present invention are described with reference to drawings in which a direct methanol fuel cell (DMFC) is taken as an example. Note here that the present invention is not limited to the embodiments mentioned below as long as it is based on the basic features described in the description.

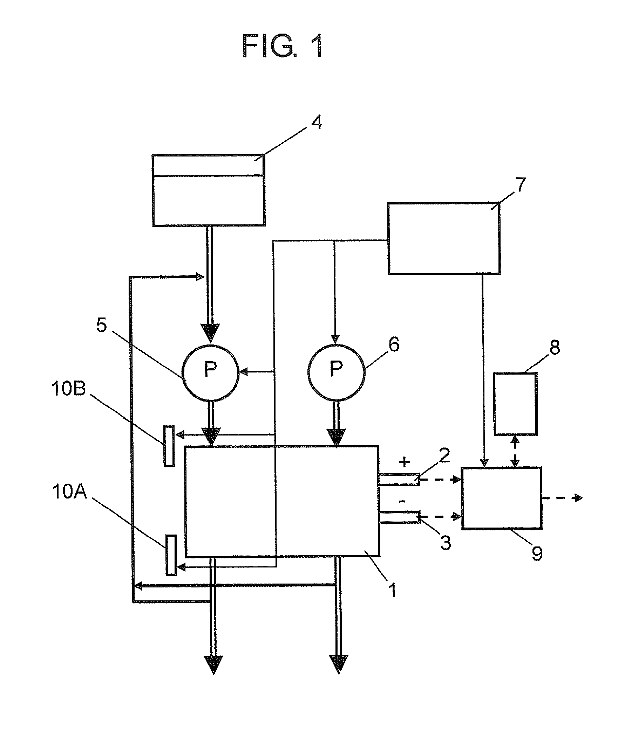

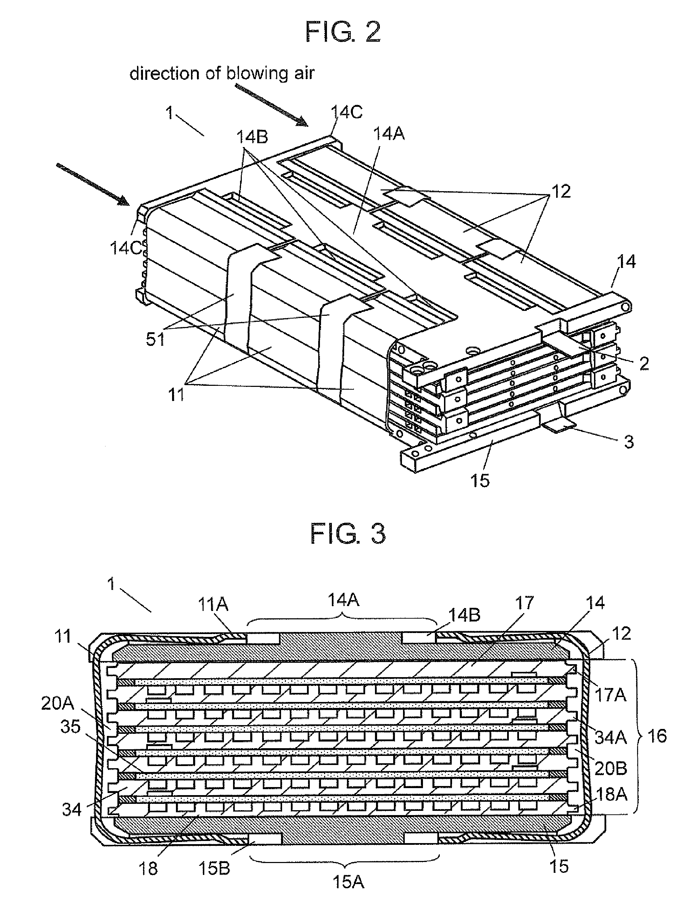

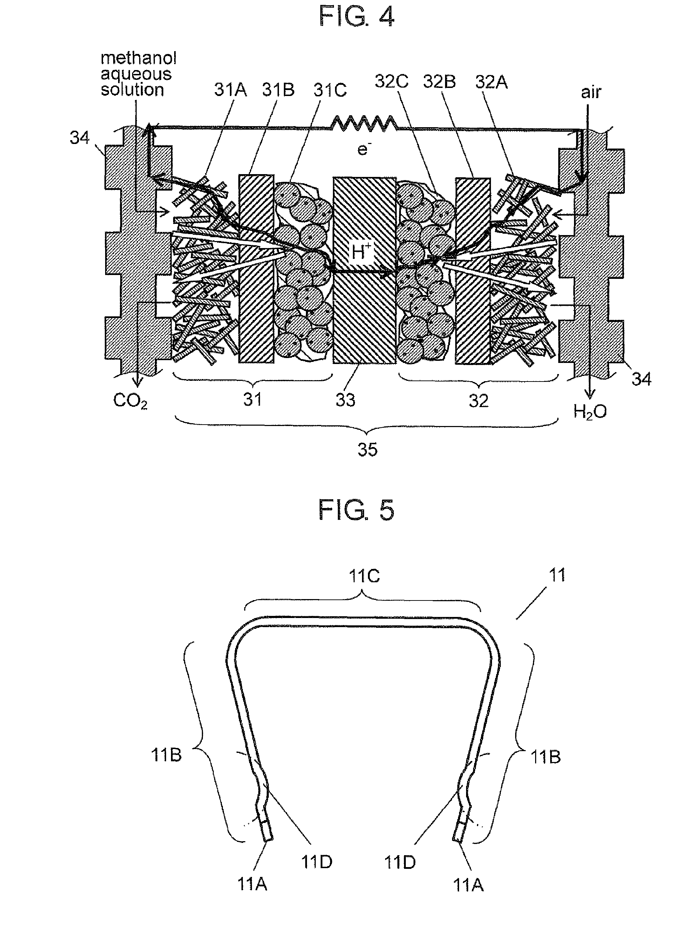

Fig. 1 is a block diagram showing a configuration of a fuel cell in accordance with an exemplary embodiment of the present invention. Figs. 2 and 3 are a perspective view and a sectional view showing a fuel cell stack in accordance with the exemplary embodiment of the present invention. Fig. 4 is an enlarged sectional view showing a schematic configuration of a principal part of the fuel cell stack.

The fuel cell includes fuel cell stack 1, fuel tank 4, fuel pump 5, air pump 6, controller 7, storage section 8, DC/DC converter 9, first air blower 10A, and second air blower 10B. Fuel cell stack 1 has an electric generation section, and outputs the generated electric power from positive-electrode terminal 2 and negative-electrode terminal 3. The output electric power is input into DC/DC converter 9. Fuel pump 5 supplies fuel in fuel tank 4 to anode electrode 31 of fuel cell stack 1. Air pump 6 supplies air as an oxidizing agent to cathode electrode 32 of fuel cell stack 1. Controller 7 controls driving of fuel pump 5 and air pump 6 and controls DC/DC converter 9 so as to control the output to the outside and the charge and discharge to storage section 8. Fuel tank 4, fuel pump 5 and controller 7 constitute a fuel supplying section that supplies fuel to anode electrode 31 in fuel cell stack 1. On the other hand, air pump 6 and controller 7 constitute an oxidizing agent supplying section for supplying an oxidizing agent to cathode electrode 32 in fuel cell stack 1.

Furthermore, controller 7 controls the operations of first air blower 10A and second air blower 10B. Note here that although not shown, DC/DC converter 9 supplies electric power to fuel pump 5, air pump 6, first air blower 10A and second air blower 10B. This electric power is generated in fuel cell stack 1 or supplied from storage section 8.

As shown in Fig. 4, anode electrode 31 is supplied with a methanol aqueous solution as fuel, and cathode electrode 32 is supplied with air. Note here that the configurations of the fuel supplying section and the oxidizing agent supplying section are not particularly limited to the above-mentioned configurations.

As shown in Figs. 2 and 3, fuel cell stack 1 includes cell stack 16, backing plates 14 and 15, first plate spring 11 and second plate spring 12. Cell stack 16 includes membrane electrode assemblies (MEAs) 35 as the electric generation section, separators 34 disposed so as to sandwich MEA 35, and a pair of end plates 17 and 18. End plates 17 and 18 sandwich MEAs 35 and separators 34 from both sides in the laminating direction of MEAs 35, that is, from both sides in the laminating direction of MEAs 35 and separators 34. As shown in Fig. 4, MEA 35 includes anode electrode 31, cathode electrode 32, and electrolyte membrane 33 interposed between anode electrode 31 and cathode electrode 32, which are laminated onto each other.

Anode electrode 31 includes diffusion layer 31A, microporous layer (MPL) 31B and catalyst layer 31C, which are laminated sequentially from the separator 34 side. Cathode electrode 32 also includes diffusion layer 32A, microporous layer (MPL) 32B and catalyst layer 32C, which are laminated sequentially from the separator 34 side. Positive-electrode terminal 2 is electrically connected to cathode electrode 32, and negative-electrode terminal 3 is electrically connected to anode electrode 31, respectively. Diffusion layers 31A and 32A are made of, for example, carbon paper, carbon felt, carbon cloth, and the like. MPL 31B and 32B are made of, for example, polytetrafluoroethylene, or a tetrafluoroethylene - hexafluoropropylene copolymer, and carbon. Catalyst layers 31C and 32C are formed a carbon, a catalyst such as platinum and ruthenium suitable for each electrode reaction highly diffused onto the surface of the carbon, and a binder. The binder bonds catalyst bodies of the carbon and the catalyst. Electrolyte membrane 33 is formed of an ion-exchange membrane for allowing a hydrogen ion to permeate, for example, a perfluorosulfonic acid - tetrafluoroethylene copolymer. End plates 17 and 18 and separator 34 are made of a carbon material or stainless steel, and are provided with grooves for supplying fuel and/or air to anode electrode 31 and/or cathode electrode 32.

Backing plate 14 is disposed at the anode electrode 31 side in cell stack 16, and backing plate 15 is disposed at the cathode electrode 32 side. Backing plates 14 and 15 are made of insulating resin, ceramic, resin containing a glass fiber, a metal plate coated with an electrically-insulating membrane, or the like.

First plate spring 11 and second plate spring 12 tighten cell stack 16 with the spring elastic force thereof via backing plates 14 and 15. Second plate spring 12 is disposed so as to face first plate spring 11. First plate spring 11 and second plate spring 12 are made of, for example, a spring steel material.

Fig. 5 is a side view showing first plate spring 11 used in fuel cell stack 1. First plate spring 11 includes two arm sections 11B configured to press cell stack 16, and connecting section 11C connecting arm sections 11B so as to have a C-shaped cross-section. Note here that since second plate spring 12 has the same shape as that of first plate spring 11, the description there of is omitted.

Next, an operation in fuel cell stack 1 is briefly described. As shown in Figs. 1 and 4, anode electrode 31 is supplied with an aqueous solution containing methanol by fuel pump 5. On the other hand, cathode electrode 32 is supplied with air pressurized by air pump 6. The methanol aqueous solution as a fuel supplied to anode electrode 31, and methanol and water vapor derived from the methanol aqueous solution are diffused in diffusion layer 31A to the entire surface of MPL 31B. Then, they pass through MPL 31B and reach catalyst layer 31C.

On the other hand, oxygen contained in the air supplied to cathode electrode 32 is diffused in diffusion layer 32A to the entire surface of MPL 32B. The oxygen further passes through MPL 32B and reaches catalyst layer 32C. Methanol that reaches catalyst layer 31C reacts as in formula (1), and oxygen that reaches catalyst layer 32C reacts as in formula (2).

CH₃OH + H₂O → CO₂ + 6H⁺ + 6e⁻ (1)

3/2O₂ + 6H⁺ + 6e⁻ → 3H₂O (2)

As a result, electric power is generated, as well as carbon dioxide is generated at the anode electrode 31 side, and water is generated at the cathode electrode 32 side as reaction products, respectively. Carbon dioxide is exhausted to the outside of the fuel cell. Gases such as nitrogen that do not react in cathode electrode 32 and unreacted oxygen are also exhausted to the outside of the fuel cell. Note here that since not all methanol in the aqueous solution at the anode electrode 31 side react, the exhausted aqueous solution is generally allowed to return to fuel pump 5 as shown in Fig. 1. Furthermore, since water is consumed in the reaction in anode electrode 31, water generated in cathode electrode 32 may be allowed to return to the anode electrode 31 side as shown in Fig. 1.

In the exemplary embodiment, cell stack 16 is fastened by first plate spring 11 and second plate spring 12 via backing plates 14 and 15. First plate spring 11 and second plate spring 12 fasten cell stack 16 extremely compactly along the outer shape of cell stack 16 as shown in Fig. 3. That is to say, dead space is extremely small on the side surface of cell stack 16, and fuel cell stack 1 can be reduced in size as compared with a case in which a cell stack is fastened by bolts and nuts as a conventional case.

Furthermore, in a case in which a cell stack is fastened by using bolts and nuts as a conventional case, a pressing point is provided at the outside of the cell stack. However, first plate spring 11 and second plate spring 12 have a pressing point in a relatively central portion in cell stack 16. Therefore, pressing power is operated in cell stack 16 uniformly in the planar direction of backing plates 14 and 15. With such a pressing power, entire cell stack 16 can be fastened uniformly. Thus, the electrochemical reactions expressed by the formulae (1) and (2) proceed uniformly in the planar direction of MEA 35. As a result, current-voltage characteristics of fuel cell stack 1 are improved.

As shown in Fig. 5, it is preferable that first plate spring 11 has convex portions 11D protruding to the inner side of the C-shaped cross-section in arm sections 11B, respectively. When cell stack 16 is pressed by convex portions 11D from both sides in the laminating direction of cell stack 16, a pressing point is determined as compared with the case in which cell stack 16 is pressed by the entire surface of arm sections 11B, and therefore cell stack 16 can be fastened stably. Furthermore, variation of the pressing power can be reduced as compared with the case in which cell stack 16 is pressed by a tip of arm section 11B. The shape of convex portion 11D has preferably a circular cylindrical surface as shown in Fig. 5. Thus, workability of fitting first plate spring 11 can be improved.

Specifically, when the length in the laminating direction of cell stack 16 is 19.1 mm, and the thickness of backing plates 14 and 15 is 1.5 mm, first plate spring 11 and second plate spring 12 are formed by using a spring steel material having a thickness of 0.5 mm. When the bend elastic modulus thereof is made to be 206,000 MPa, pressing power of 0.21 MPa in average can be applied to MEA 35. Furthermore, variation of pressure in the planer direction of MEA 35 is not more than 4%. In cell stack 16 having such a configuration, it is experimentally shown that when the pressuring power of MEA 35 is not less than 0.15 MPa, electric power generation property is not lowered. Therefore, when such first plate spring 11 and second plate spring 12 are used, a necessary pressing power can be secured.

Note here that as shown in Fig. 5, it is preferable that connecting section 11C of first plate spring 11 has a planar shape in a state in which first plate spring 11 is removed from backing plates 14 and 15. That is to say, it is preferable that in the initial state in which the shape of first plate spring 11 is changed, connecting section 11C has a planar shape. In general, a connecting section of a plate spring having a C-shaped cross-section is curved in a release state so that it can be easily bent when it is fitted. On the contrary, in the exemplary embodiment, connecting section 11C has a planar shape in a state in which it is removed from cell stack 16 and backing plates 14 and 15. First plate spring 11 having such a shape can be manufactured easily. Furthermore, when first plate spring 11 is fitted into backing plates 14 and 15, protrusion of connecting section 11C to the inner side is reduced. As a result, the dimension of a curved portion between connecting section 11C and arm section 11B protruding to the outside is reduced. Therefore, the occupied volume of fuel cell stack 1 can be further reduced.

Furthermore, as shown in Figs. 2 and 3, it is preferable that backing plates 14 and 15 have protrusions 14A and 15A protruding to the outside of laminating direction of MEA 35 and end plates 17 and 18 in cell stack 16, respectively. Then, it is preferable that tips 11A of first plate spring 11 are brought into contact with protrusions 14A and 15A. When first plate spring 11 is fitted into cell stack 16, tips 11A of first plate spring 11 are brought into contact with protrusions 14A and 15A provided on backing plates 14 and 15. Thereby, the position in which first plate spring 11 is fitted into cell stack 16 can be made stable. In particular, when arm sections 11B are provided with convex portions 11D, it is preferable that the dimensions of protrusions 14A and 15A provided on backing plates 14 and 15 and the dimension from tip 11A to convex portion 11D are designed appropriately. Thereby, convex portion 11D can be disposed on an appropriate pressing position reliably.

Furthermore, as shown in Figs. 2 and 3, it is preferable that protrusions 14A and 15A on backing plates 14 and 15 are provided with notch portion 14B and 15B, respectively. Notch portions 14B and 15B extend in the second direction perpendicular to the first direction in which first plate spring 11 and second plate spring 12 face each other, and they are disposed in parallel on protrusions 14A and 15A in the second direction. When protrusions 14A and 15A are provided with notch portions 14B and 15B, a holder of a jig for extending the length between arm portions 11B can be accommodated in notch portions 14B and 15B. Therefore, workability of fitting first plate spring 11 and second plate spring 12 into cell stack 16 can be improved.

Space 20A and Space 20B are provided between connecting section 11C of first plate spring 11 and cell stack 16 including MEAs 35 and end plates 17 and 18. Space 20A and Space 20B can be used as an air passage for cooling cell stack 16. That is to say, space 20A is a first cooling air flow passage provided between connecting section 11C of first plate spring 11, and MEA 35 and end plates 17 and 18. Similarly, space 20B is a second cooling air flow passage provided between a connecting section of second plate spring 12, and MEA 35 and end plates 17 and 18. By using first air blower 10A and second air blower 10B shown in Fig. 1, air is allowed to flow from the direction shown in Fig. 2. With this structure, first air blower 10A can blow cool air into space 20A and second air blower 10B can blow cool air into space 20B, respectively. Thus, cell stack 16 can be cooled.

Note here that as shown in Fig. 3, it is preferable that fins 17A and 18A are respectively provided on the side surfaces of end plates 17 and 18 facing first plate spring 11 or second plate spring 12. Furthermore, it is preferable that fins 34A are also provided on the side surfaces of separator 34 facing first plate spring 11 or second plate spring 12, respectively. Thus, cell stack 16 can be cooled more effectively.

Furthermore, as shown in Fig. 2, it is preferable that seal parts 51 are provided so as to connect one first plate spring 11 to another of the plurality first plate springs 11 and one second plate spring 12 to another of the plurality of second plate springs 12. Thus, it is possible to prevent cooling air from leaking out from portions between first plate springs 11 and portions between second plate springs 12. Therefore, cooling air can be allowed to flow to the inside of first plate spring 11 and second plate spring 12 located at the downstream side of the cooling air.

Furthermore, it is preferable that wall parts 14C are provided on backing plates 14 and 15 at the inlet side of space 20A as the first cooling air flow passage. Wall parts 14C are respectively located at outer sides in the vertical direction, namely the laminating direction of cell stack 16, than the upper and lower outsides of arm sections 11B of first plate spring 11. Similarly, it is preferable that wall parts 14C are provided on backing plates 14 and 15 at the inlet side of space 20B as the second cooling air flow passage. Wall parts 14C are respectively located at outer sides in the vertical direction than the upper and lower outsides of the arm sections of second plate spring 12 in the laminating direction of cell stack 16. Thus, cooling air can be allowed to blow preferentially to the surface on which end plates 17 and 18 or separators 34 are exposed.

Note here that in the above description, cell stack 16 is formed by using a plurality of MEAs 35, disposing separators 34 between MAEs 35, disposing end plates 17 and 18 in the both sides in the laminating direction, and further disposing backing plates 14 and 15 on the outside of the end plates 17 and 18. However, the present invention is not necessarily limited to this configuration. A single MEA 35 may be sandwiched between end plates 17 and 18 from the both sides in the laminating direction of MEA 35, and MEA 35 and end plates 17 and 18 may be tightened in the laminating direction only by first plate spring 11. In this case, it is preferable that first plate spring 11 is formed so that it presses the vicinity of the center portion of end plates 17 and 18. Needless to say, in this configuration, second plate spring 12 may be used. Furthermore, in Fig. 2, a plurality of first plate springs 11 and second plate springs 12 are used. However, depending upon the size of cell stack 16, one each of first plate spring 11 and second plate spring 12 may be used. Thus, a single cell may be pressed or a cell stack may be pressed. One or plurality of plate springs, and one pair or plural pairs of plate springs may be used.

However, when second plate spring 12 is used in addition to first plate spring 11, a unit cell of fuel cell or a cell stack can be fastened uniformly in the planer direction of MEA 35 reliably without considerably increasing the size of fuel cell stack 1. Furthermore, since space between the connecting section of second plate spring 12, and MEA 35 and end plates 17 and 18 is used as a second cooling air flow passage, the unit cell of fuel cell can be cooled from two surfaces facing each other.

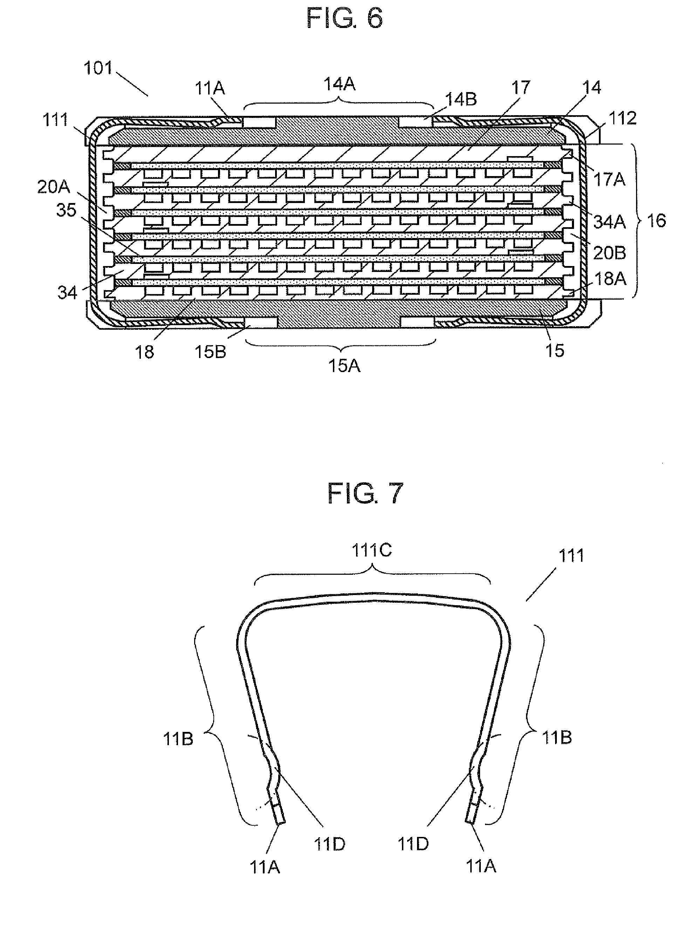

Next, a configuration in which a first plate spring and a second plate spring having different shapes are used is described. Fig. 6 is a sectional view showing another fuel cell stack in accordance with the exemplary embodiment of the present invention. Fig. 7 is a side view showing a first plate spring used in the fuel cell stack shown in Fig. 6. In this configuration, instead of first plate spring 11 shown in Fig. 5 and second plate spring 12 having the same shape as first plate spring 11, first plate spring 111 shown in Fig. 7 and second plate spring 112 having the same shape as first plate spring 111 are used. Other configurations are the same as those shown in Fig. 3.

As shown in Fig. 7, connecting section 111C of first plate spring 111 has not a linear cross-sectional shape (planar shape) but a shape protruding to the opposite side to arm sections 11B in a state in which first plate spring 111 is removed from cell stack 101. Connecting section 111C becomes a planar shape in a state in which it is mounted on fuel cell stack 101. That is to say, by bending connecting section 111C to the outside from arm sections 11B, connecting section 111C becomes a planar shape that is in parallel to the side surfaces of fuel cell stack 101 when first plate spring 111 is mounted on fuel cell stack 101.

With this configuration, sectional areas of space 20A and 20B can be increased when first plate spring 111 and second plate spring 112 are mounted on cell stack 101. At this time, the distance between first plate spring 111 and second plate spring 112 is not different from that between first plate spring 11 and second plate spring 12 in Fig. 3. With this configuration, the air passage resistance of space 20A and 20B as a cooling air flow passage can be reduced. As a result, cooling efficiency is improved.

Note here that, it is preferable that backing plates 14 and 15 are provided and that backing plates 14 and 15 are formed of a material that is different from that of end plates 17 and 18. Thus, backing plates 14 and 15 directly receiving a pressing power of first plate spring 11, and end plates 17 and 18 also functioning as a flow passage of fuel and an oxidizing agent can be optimized. For example, when backing plates 14 and 15 are formed of a material that is more rigid than that of end plates 17 and 18, it is possible to suppress the deformation of backing plates 14 and 15 due to pressing power of first plate spring 11. As a result, the unit cell of fuel cell or the cell stack can be fastened more uniformly in the planer direction of MEA 35. Furthermore, when backing plates 14 and 15 are formed of an electrically-insulating material, it is not necessary to consider the short circuit by arm section 11B of first plate spring 11.

Furthermore, when backing plates 14 and 15 are not used, an electrically-insulating layer is formed at the inner side of the C-shaped cross section of first plate spring 11 (and second plate spring 12) so that short circuit due to first plate spring 11 does not occur. That is to say, backing plates 14 and 15 are not essential. When backing plates 14 and 15 are not used, it is preferable that end plates 17 and 18 are provide with protrusions corresponding to protrusions 14A and 15A and notch portions corresponding to notch portions 14B and 15B. Furthermore, it is preferable that tips 11A of arm sections 11B of first plate spring 11 (and second plate spring 12) are apart from end plates 17 and 18.

Furthermore, it is preferable that wall parts (corresponding to wall parts 14C) are provided on end plates 17 and 18 at the inlet side of space 20A as the first cooling air flow passage. The wall parts are respectively located at outer sides in the vertical direction, namely the laminating direction of cell stack 16, than the upper and lower outsides of arm sections 11B of first plate spring 11 in. Similarly, it is preferable that wall parts (corresponding to wall parts 14C) are provided on end plates 17 and 18 at the inlet side of space 20B as the second cooling air flow passage. The wall parts are located at outer sides in the vertical direction, namely the laminating direction of cell stack 16, than the upper and lower outsides of the arm sections of second plate spring 12. Thus, cooling air can be sent preferentially to the surface on which end plates 17 and 18 or separators 34 are exposed.

In the exemplary embodiment, DMFC is described as an example. However, the configuration of the present invention can be applied to any fuel cells using a power generation element that is the same as cell stack 16. For example, it may be applied to a so-called polymer solid electrolyte fuel cell and a methanol modified fuel cell, which use hydrogen as fuel.

### INDUSTRIAL APPLICABILITY

In a fuel cell stack and a fuel cell using the fuel cell stack according to the present invention, a unit cell of fuel cell or a cell stack is fastened by a plate spring. With such a simple configuration, it is possible to form the fuel cell stack compactly, and it is possible to fasten a membrane electrode assembly, or a set of a membrane electrode assembly, a separator and end plates uniformly. Such a fuel cell stack and the fuel cell using the fuel cell stack are particularly useful as a power source of small electronic devices.

### REFERENCE MARKS IN THE DRAWINGS

1 fuel cell stack
2 positive-electrode terminal
3 negative-electrode terminal
4 fuel tank
5 fuel pump
6 air pump
7 controller
8 storage section
9 DC/DC converter
10A first air blower
10B second air blower
11, 111first plate spring
11A tip
11B arm section
11C, 111C connecting section
11D convex portion
12, 112 second plate spring
14, 15backing plate
14A, 15A protrusion
14B, 15B notch portion
14C wall part
16 cell stack
17, 18 end plate
17A, 18A, 34A fin
20A, 20B space
31 anode electrode
31A, 32A diffusion layer
31B, 32B microporous layer (MPL)
31C, 32C catalyst layer
32 cathode electrode
33 electrolyte membrane
34 separator
35 membrane electrode assembly (MEA)
51 seal part

## Claims

1. A fuel cell stack comprising:
a membrane electrode assembly including an anode electrode, a cathode electrode, and an electrolyte membrane interposed between the anode electrode and the cathode electrode, which are laminated onto each other;
a pair of end plates sandwiching the membrane electrode assembly from both sides in a laminating direction of the membrane electrode assembly; and
a first plate spring tightening the membrane electrode assembly and the end plates in the laminating direction, the first plate spring including two arm sections configured to press the end plates and a connecting section connecting the two arm sections so as to have a C-shaped cross-section,
wherein space between the connecting section of the first plate spring, and the membrane electrode assembly and the end plates functions as a first cooling air flow passage.

2. The fuel cell stack according to claim 1,
wherein a fin is provided on a side surface of each of the end plates facing the first plate spring.

3. The fuel cell stack according to claim 1,
wherein the membrane electrode assembly is one of membrane electrode assemblies, and a separator is provided between the membrane electrode assemblies to form a cell stack.

4. The fuel cell stack according to claim 3,
wherein a fin is provided on a side surface of the separator facing the first plate spring.

5. The fuel cell stack according to claim 1,
wherein the first plate spring is one of a plurality of first plate springs, and a seal part connecting between the first plate springs is further provided.

6. The fuel cell stack according to claim 1,
wherein wall parts are provided on the end plates at an inlet side of the first cooling air flow passage, and each of the wall parts is located at outer sides in a vertical direction, namely the laminating direction, than upper outside of one arm section and lower outside of the other arm section of the two arm sections of the first plate spring.

7. The fuel cell stack according to claim 1,
wherein the connecting section of the first plate spring has a shape protruding to an opposite side to the arm sections in a state in which the first plate spring is removed from the fuel cell stack.

8. The fuel cell stack according to claim 1, further comprising a second plate spring disposed facing the first plate spring in a direction perpendicular to the laminating direction of the membrane electrode assembly and the end plates, the second plate spring including two arm sections configured to press the end plates and a connecting section connecting the two arm sections so as to have a C-shaped cross-section,
wherein space between the connecting section of the second plate spring, and the membrane electrode assembly and the end plates functions as a second cooling air flow passage.

9. The fuel cell stack according to claim 8,
wherein the connecting section of the second plate spring has a shape protruding to an opposite side to the arm sections in a state in which the second plate spring is removed from the fuel cell stack.

10. The fuel cell stack according to claim 1, further comprising a pair of backing plates at an outside of the end plates in a laminating direction of the membrane electrode assembly and the end plates,
wherein the first plate spring presses the end plates via the backing plates.

11. The fuel cell stack according to claim 10,
wherein wall parts are provided on the backing plates at an inlet side of the first cooling air flow passage, and each of the wall parts is located at outer sides in a vertical direction, namely the laminating direction, than upper outside of one arm section and lower outside of the other arm section of the two arm sections of the first plate spring.

12. The fuel cell stack according to claim 10, further comprising a second plate spring disposed facing the first plate spring in a direction perpendicular to the laminating direction of the membrane electrode assembly and the end plates, the second plate spring including two arm sections configured to press the backing plates and a connecting section connecting the two arm sections so as to have a C-shaped cross-section,
wherein space between the connecting section of the second plate spring, and the membrane electrode assembly and the end plates functions as a second cooling air flow passage.

13. The fuel cell stack according to claim 12,
wherein the connecting section of the second plate spring has a shape protruding to an opposite side to the arm sections in a state in which the second plate spring is removed from the fuel cell stack.

14. A fuel cell comprising:
a fuel cell stack according to claim 1;
a fuel supplying section configured to supply fuel to the anode electrode; and
an oxidizing agent supplying section configured to supply an oxidizing agent to the cathode electrode.

15. The fuel cell according to claim 14,
wherein the connecting section of the first plate spring has a shape protruding to an opposite side to the arm sections in a state in which the first plate spring is removed from the fuel cell stack.

16. The fuel cell according to claim 14,
further comprising a first air blower configured to blow air to the first cooling air flow passage.

17. The fuel cell according to claim 16,
wherein the fuel cell stack further comprises a second plate spring disposed facing the first plate spring in the direction perpendicular to a laminating direction of the membrane electrode assembly and the end plates, the second plate spring including two arm sections configured to press the end plates and a connecting section connecting the two arm sections so as to have a C-shaped cross-section,
space between the connecting section of the second plate spring, and the membrane electrode assembly and the end plates functions as a second cooling air flow passage, and
a second air blower configured to blow air to the second cooling air flow passage is further provided.

18. The fuel cell according to claim 17,
wherein the connecting section of the second plate spring has a shape protruding to an opposite side to the arm sections in a state in which the second plate spring is removed from the fuel cell stack.
